# EUROPÄISCHE PATENTSCHRIFT

(11) **EP 1 341 065 B1**
(45) Veröffentlichungstag und Bekanntmachung des Hinweises auf die Patenterteilung: **29.03.2006**
(21) Anmeldenummer: 03001234.8
(22) Anmeldetag: 20.01.2003
(51) Int. Cl.: G05B 19/408

(54) **Verfahren zur Bearbeitung von Werkstücken mit geraden Oberflächenausnehmungen**
Method of machining straight recesses in the surfaces of workpieces
Procédé d'usinage de cavités rectilignes dans les surfaces de pièces

(30) Priorität: 27.02.2002 DE 10208411
(43) Veröffentlichungstag der Anmeldung: 03.09.2003
(73) Patentinhaber: Werkzeugmaschinenfabrik Zerbst GmbH, 39261 Zerbst (DE)
(72) Erfinder: Walz, Jürgen, 72636 Frickenhausen (DE)
(74) Vertreter: Zmyj, Erwin

(56) Entgegenhaltungen:
- EP-A- 0 328 662
- EP-A- 0 562 232
- EP-A- 0 995 539
- DE-U- 29 807 842
- US-A- 4 543 020
- US-A- 4 589 174
- US-A- 4 664 570

## Beschreibung

Die Erfindung bezieht sich auf ein Verfahren zur Bearbeitung von Werkstücken mit geraden Oberflächenausnehmungen z. B. Nuten mit von der Kreisform abweichendem Querschnitt, bei dem die Werkzeugachse zur Erzielung des gewünschten Querschnitts unter einem Anstellwinkel zur Z-Achse im kartesischen Koordinatensystem der Werkzeugmaschine eingestellt wird und zur Bearbeitung einer Oberflächenausnehmung mit einem Schrägungswinkel zwischen Werkstückachse und Längsachse der Oberflächenausnehmung eine Relativverschiebung zwischen Werkstück und Werkzeug in Richtung der Z-Achse und in Abhängigkeit von dem Schrägungswinkel auch in X-Richtung des kartesischen Koordinatensystems der Werkzeugmaschine durchgeführt wird und bei dem der Wechsel von einer Oberflächenausnehmung zur nächsten Oberflächenausnehmung mit gleichem Schrägungswinkel durch Relativverdrehung zwischen Werkstück und Werkzeug in Richtung der C-Achse erfolgt.

Bei einem Verfahren dieser Art, das von der Anmelderin bereits durchgeführt wurde, hat es sich als nachteilig herausgestellt, dass bei der Bearbeitung von Oberflächenausnehmungen mit unterschiedlichen Schrägungswinkeln bezogen auf die Werkstückachse, das Werkzeug geschwenkt werden musste, was einen entsprechenden konstruktiven Aufwand in Form einer zusätzlichen Schwenkachse für das Werkzeug erforderte.

Aufgabe der Erfindung ist es, den konstruktiven Aufwand zu verringern und dabei trotzdem eine einfache Steuerung des Bearbeitungsvorganges ausschließlich durch eine geradlinige Relativbewegung zwischen Werkzeug und Werkstück im Rahmen des kartesischen Koordinatensystems der Werkzeugmaschine zu ermöglichen.

Diese Aufgabe wird bei einem Verfahren der eingangs erläuterten Art erfindungsgemäß dadurch gelöst, dass zur Bearbeitung zuerst der Anstellwinkel des Werkzeuges eingestellt wird, dass dann die kartesischen Koordinatensysteme von Werkstück und Werkzeug so lange relativ zueinander verdreht werden, bis die Projektion der Werkzeugachse auf die X-Y-Ebene parallel zu einer angenommenen Hauptachse des Maschinenkoordinatensystems liegt, dass bei einem Schrägungswinkel von 0° jede Oberflächenausnehmung ausschließlich durch Relativverschiebung von Werkzeug und Werkstück in Richtung der Z-Achse und bei spiegelbildlichen Schrägungswinkeln von ± > 0° die Bearbeitung ausschließlich durch Relativverschiebung in allen drei Achsen des Maschinenkoordinatensystems erfolgt und dass das Werkzeug relativ zum Werkstück für die positiven Schrägungswinkel an der einen Seite und für die negativen Schrägungswinkel an der spiegelbildlich gegenüber liegenden Seite in Eingriff gebracht wird.

Aufgrund der Erfindung ist es möglich, geradlinigen Oberflächenausnehmungen mit jedem beliebigen Schrägungswinkel, d. h. mit Schrägungswinkel 0°, bei dem die Längsrichtung der Oberflächenausnehmung und die Achsrichtung des Werkstückes parallel verlaufen und mit Schrägungswinkeln von ± > 0°, d. h. abwechselnd gegensinnig verlaufenden Oberflächenausnehmungen herzustellen, ohne eine zusätzliche Schwenkachse für das Werkzeug bei Oberflächenausnehmungen mit einem Schrägungswinkel ± > 0° vorzusehen und dabei die Bearbeitung ausschließlich durch Interpolation zwischen den Achsen X, Y und Z die Steuerung bei der Bearbeitung der Oberflächenausnehmungen vorzunehmen. Bei dem Sonderfall, bei dem die Längsachse der Oberflächenausnehmung parallel zur Werkstückachse verläuft, kommt man mit einer Relativverschiebung zwischen Werkstück und Werkzeug ausschließlich in Z-Richtung des Maschinenkoordinatensystems aus. Es ergibt sich also eine einfache Bearbeitung mit einer konstruktiv einfachen Werkzeugmaschine wie dies auch durch die drehende Bearbeitung entsprechend EP 0 926 373 der Fall ist, bei der Werkstücke ebenfalls mit Oberflächenausnehmungen, insbesondere Teile von Gleichlaufgelenken, bearbeitet werden.

Eine besonders vorteilhafte Ausgestaltung der Erfindung ist darin zu sehen, dass das Werkstück hängend mit freiem Spänefall bearbeitet wird. Ein Sonderfall der hängenden Bearbeitung ist die Aufnahme des Werkstückes in einer vertikal angeordneten Arbeitsspindel. Der freie Spänefall hat den Vorteil, dass Führungsbahnen und sonstige Einrichtungen der Werkzeugmaschine nicht beeinträchtigt werden, und dass beim Werkstück keine thermischen Probleme durch im Werkstück verbleibende, glühende Späne entstehen. Die vertikale Arbeitsspindel bringt die bei dieser Maschinenart üblichen Vorteile mit sich, die beispielsweise darin liegen, dass nach dem Pick-Up-Verfahren eine einfache Handhabung der Werkstücke möglich ist.

Aufgrund der erfindungsgemäßen Ausgestaltung ist es möglich, sowohl linkssteigende als auch rechtssteigende Oberflächenausnehmungen herzustellen, ohne weder das Werkstück noch das Werkzeug um eine Schwenkachse des kartesischen Koordinatensystems der Werkzeugmaschine zu verschwenken. Die Verschiebung zwischen Werkstück und Werkzeug erfolgt also nur in linearer Richtung entsprechend den drei Achsen des Koordinatensystems. Die Rotationsachse C ist nur notwendig, um das Werkstück zur Bearbeitung der aufeinanderfolgenden parallelen Bahnen weiterzutakten.

Die Erfindung wird nachfolgend anhand eines Ausführungsbeispiels näher erläutert. In der Zeichnung zeigen:
- **Figur 1:**: eine schematische Darstellung eines Spindelstockes mit Arbeitsspindel und Werkzeug in X-Richtung;
- **Figur 2:**: eine Seitenansicht der Darstellung nach Figur 1;
- **Figur 3:**: eine Draufsicht auf eine Kurvenscheibe; und
- **Figur 4:**: eine Seitenansicht der Kurvenscheibe nach Figur 3.

An einem vertikal angeordneten Spindelstock 1 ist eine Arbeitsspindel 2 in Z-Richtung des kartesischen Koordinatensystems der Werkzeugmaschine verschiebbar angeordnet. Der Spindelstock 1 ist mittels nicht dargestellter Schlitten in X- und Y-Richtung verschiebbar. In einem Spannfutter 3 der Arbeitsspindel 2 ist ein Werkstück 4 gehalten, bei dem geradlinige, jedoch über der Werkstückachse gegenläufig verschränkte Oberflächenausnehmungen 8 hergestellt werden sollen. Zur Herstellung dieser Oberflächenausnehmungen dient ein Fräswerkzeug 5, das in einer Frässpindel 6 gehalten ist, die in einem nicht dargestellten Werkzeugrevolver einer ebenfalls nicht dargestellten Werkzeugmaschine gehalten und antreibbar ist.

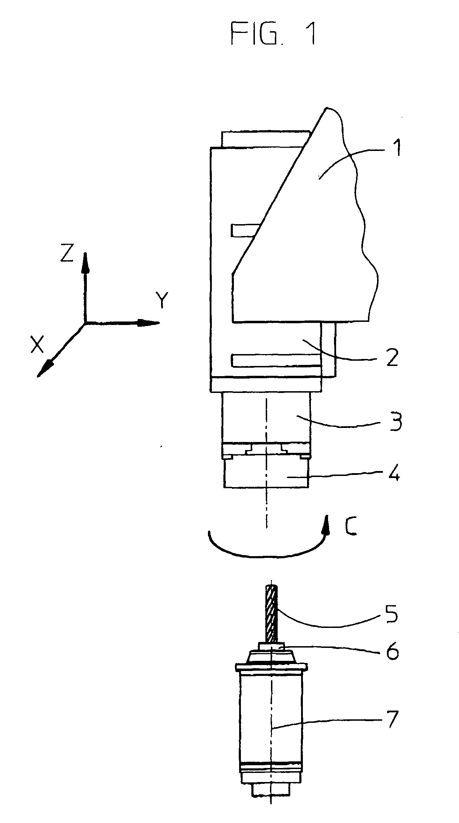

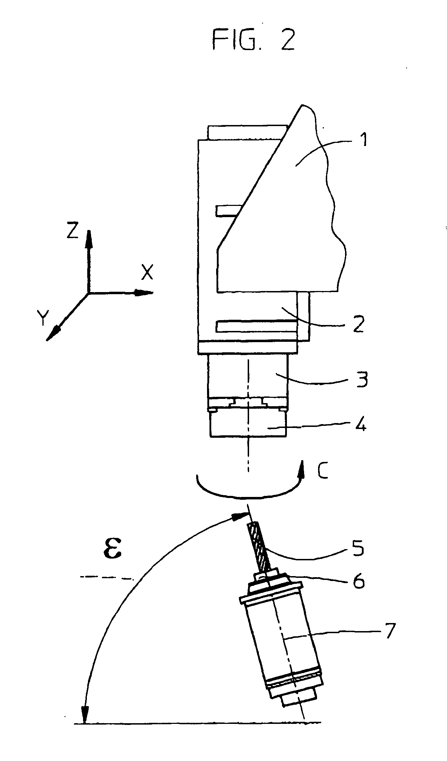

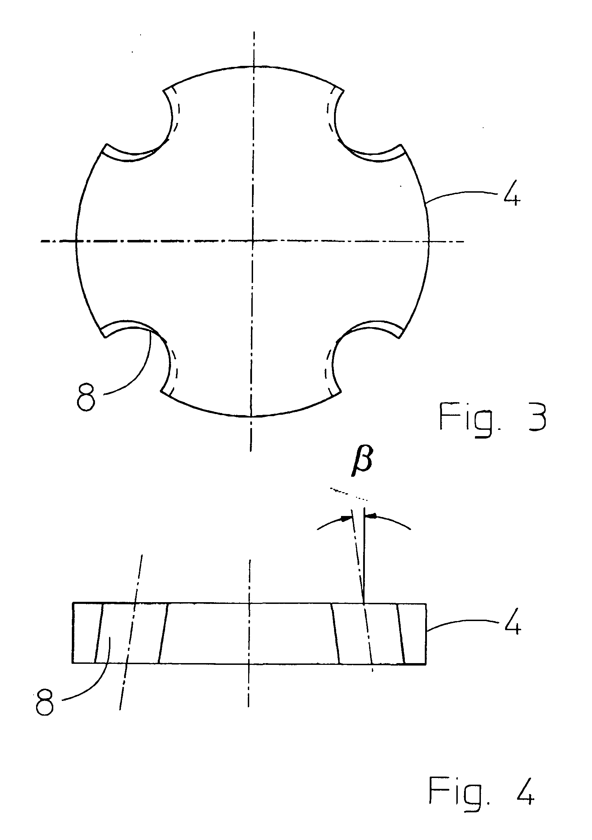

Die mit 7 bezeichnete Achse der Frässpindel 6 weist, wie aus Figur 2 ersichtlich, gegenüber der durch die Achsen X und Y bestimmten Ebene einen Winkel auf, der mit ε bezeichnet ist und einen Raumwinkel darstellt, welcher sich dadurch ergibt, dass die Frässpindel gegenüber dem Werkstück 4 einen Anstellwinkel α zur Erzielung eines von der Kreisform abweichenden Profilquerschnittes und eine weiteren Winkel einnimmt, der notwendig ist, um einen bestimmten Schrägungswinkel zu erzielen. In den Figuren 3 und 4 ist eine Kurvenscheibe 4 dargestellt, die das Werkstück bildet. Am Außenumfang dieses Werkstückes sind Oberflächenausnehmungen 8 ausgebildet, die mittels der Werkzeugmaschine gemäß den Figuren 1 und 2 hergestellt werden sollen. Wie aus Figur 4 ersichtlich, weisen diese eine Linkssteigung und eine Rechtssteigung auf, wobei jeweils benachbarte Oberflächenbahnen 8 unterschiedlich um einen Winkel β geneigt sind. Der Winkel ε ergibt sich also aus der Anstellung des Fräswinkels zum Werkstück entsprechend dem Anstellwinkel α und entsprechend dem Winkel β und wird in der Projektionsebene auf die X-Z-Ebene gemessen und in Figur 2 dargestellt. Dieser Winkel ergibt sich dadurch, dass das kartesische Koordinatensystem des Werkstückes und der Werkzeugmaschine, solange gegeneinander verdreht werden, bis die Projektion der Werkzeugachse auf der X-Y-Ebene parallel zu einer angenommenen Hauptachse des Koordinatensystems liegt. Die Verdrehung erfolgt dabei um die C-Achse. Für eine gute Zugänglichkeit bei der Bedienung der Maschine ist es zweckmäßig, die Frässpindel so anzuordnen, dass sie vom Bedienenden weggerichtet ist, wie sich dies aus Figur 1 ergibt. Aufgrund dieser Maßnahme bildet die X-Achse des Maschinenkoordinatensystems mit der X-Achse des Werkstückkoordinatensystems einen Winkel. Die Z-Achsen beider Systeme verlaufen parallel zueinander. Diese Winkel zwischen den beiden X-Achsen werden im Steuerungssystem der Werkzeugmaschine, d. h. in der Software berücksichtigt. Hieraus ergibt sich die Möglichkeit, Oberflächenausnehmungen sowohl mit einer Linkssteigung als auch mit einer Rechtssteigung ohne Schwenken der Frässpindel nur durch Interpolation zwischen den Achsen X, Y und Z des Maschinenkoordinatensystems zu erreichen. Außerdem muss beim Wechsel von einer Linkssteigung zu einer Rechtssteigung die Anlageseite des Werkzeuges am Werkstück gewechselt werden. Für den Fall, dass alle Werkstücke mit dem gleichen Schrägungswinkel hergestellt werden, ergibt sich eine besonders einfache Ausgestaltung der Werkzeugmaschine, da für diesen Fall die Frässpindel in ihrer Lage nicht verändert werden muss.

## Patentansprüche

1. Verfahren zur Bearbeitung von Werkstücken mit Oberflächenausnehmungen, zum Beispiel Nuten, mit von der Kreisform abweichendem Querschnitt, bei dem die Werkzeugachse zur Erzielung des gewünschten Querschnitts unter einem Anstellwinkel zur Z-Achse im kartesischen Koordinatensystem der Werkzeugmaschine eingestellt wird und zur Bearbeitung einer Oberflächenausnehmung mit einem Schrägungswinkel zwischen Werkstückachse und Längsachse der Oberflächenausnehmung eine Relativverschiebung zwischen Werkstück und Werkzeug in Richtung der Z-Achse und in Abhängigkeit von dem Schrägungswinkel auch in X-Richtung des kartesischen Koordinatensystems der Werkzeugmaschine durchgeführt wird und bei dem der Wechsel von einer Oberflächenausnehmung zur nächsten Oberflächenausnehmung mit gleichem Schrägungswinkel durch Relativverdrehung zwischen Werkstück und Werkzeug in Richtung der C-Achse erfolgt, **dadurch gekennzeichnet, dass** zur Bearbeitung zuerst der Anstellwinkel des Werkzeuges eingestellt wird, dass dann die kartesischen Koordinatensysteme von Werkstück und Werkzeug solange relativ zueinander verdreht werden, bis die Projektion der Werkzeugachse auf die X-Y-Ebene parallel zu einer angenommenen Hauptachse des Maschinenkoordinatensystems liegt, dass bei einem Schrägungswinkel von 0° die Oberflächenausnehmung ausschließlich durch Relativverschiebung von Werkzeug und Werkstück in Richtung der Z-Achse und bei Schrägungswinkeln von ± > 0° die Bearbeitung ausschließlich durch Relativverschiebung in allen drei Achsen des Maschinenkoordinatensystems erfolgt, und dass das Werkzeug relativ zum Werkstück für die positiven Schrägungswinkel an der einen Seite und für die negativen Schrägungswinkel an der spiegelbildlich gegenüber liegenden Seite in Eingriff gebracht wird.

2. Verfahren nach Anspruch 1, **dadurch gekennzeichnet, dass** das Werkstück hängend mit freiem Spänefall bearbeitet wird.

3. Verfahren nach Anspruch 1 oder 2, **dadurch gekennzeichnet, dass** die Werkzeugachse abweichend von der Horizontalen und der Vertikalen windschief zur Werkstückachse eingestellt wird.

## Claims

1. Method of machining workpieces with surface recesses, for example grooves, having a cross-section deviating from the circular shape, in which method the tool axis, for achieving the desired cross section, is set at a setting angle relative to the Z axis in the cartesian coordinate system of the machine tool, and, for machining a surface recess with a skew angle between workpiece axis and longitudinal axis of the surface recess, a relative displacement is carried out between workpiece and tool in the direction of the Z axis and, as a function of the skew angle, also in the X direction of the cartesian coordinate system of the machine tool, and in which the change from one surface recess to the next surface recess having the same skew angle is effected by relative rotation between workpiece and tool in the direction of the C axis, **characterized in that**, for the machining, first of all the setting angle of the tool is set, **in that** the cartesian coordinate systems of workpiece and tool are then rotated relative to one another until the projection of the tool axis onto the X-Y plane lies parallel to an assumed main axis of the machine coordinate system, **in that**, at a skew angle of 0°, the surface recess is made solely by relative displacement of tool and workpiece in the direction of the Z axis, and, at skew angles of ± > 0°, the machining is effected solely by relative displacement in all three axes of the machine coordinate system, and **in that** the tool is brought into engagement relative to the workpiece on the one side for the positive skew angles and on the opposite laterally transposed side for the negative skew angles.

2. Method according to Claim 1, **characterized in that** the workpiece is machined in a suspended manner with free fall of chips.

3. Method according to Claim 1 or 2, **characterized in that** the tool axis is set aslant relative to the workpiece axis in such a way as to deviate from the horizontal and the vertical.

## Revendications

1. Procédé d'usinage de pièces avec des cavités de surface, par exemple des rainures, de section transversale s'écartant de la forme circulaire, dans lequel l'axe de l'outil pour produire la section transversale souhaitée est ajusté suivant un angle d'attaque par rapport à l'axe Z dans les système de coordonnées cartésiennes de la machine-outil et pour l'usinage d'une cavité de surface avec un angle d'hélice entre l'axe de la pièce et l'axe longitudinal de la cavité de surface, un déplacement relatif entre la pièce et l'outil est réalisé dans la direction de l'axe Z et en fonction de l'angle d'hélice également dans la direction X du système de coordonnées cartésiennes de la machine-outil et dans lequel le passage d'une cavité de surface à la cavité de surface suivante s'effectue avec le même angle d'hélice par rotation relative entre la pièce et l'outil dans la direction de l'axe C, **caractérisé en ce que** pour l'usinage, on ajuste d'abord l'angle d'attaque de l'outil, **en ce qu'**ensuite les systèmes de coordonnées cartésiennes de la pièce et de l'outil sont tournés l'un par rapport à l'autre jusqu'à ce que la projection de l'axe de l'outil dans le plan X-Y soit parallèle à un axe principal donné du système de coordonnées de la machine, **en ce que** pour un angle d'hélice de 0°, la cavité de surface est produite uniquement par déplacement relatif de l'outil et de la pièce dans la direction de l'axe Z et pour des angles d'hélice de ± > 0°, l'usinage s'effectue exclusivement par mouvement relatif dans les trois axes du système de coordonnées de la machine, et **en ce que** l'outil est amené en prise par rapport à la pièce pour l'angle d'hélice positif contre un côté et pour l'angle d'hélice négatif contre le côté opposé par symétrie spéculaire.

2. Procédé selon la revendication 1, **caractérisé en ce que** la pièce est usinée en continu avec une libre chute de copeaux.

3. Procédé selon la revendication 1 ou 2, **caractérisé en ce que** l'axe de l'outil est ajusté à l'écart de l'horizontale et de la verticale en dévers par rapport à l'axe de la pièce.
